# EUROPEAN PATENT APPLICATION

(11) **EP 4 725 446 A1**
(43) Date of publication of application: **15.04.2026**
(21) Application number: 25207509.8
(22) Date of filing: 08.10.2025
(51) Int. Cl.: A61C 5/42

(54) **ENDODONTIC TOOL**

(30) Priority: 10.10.2024 IT 202400022527
(71) Applicant: Universita' Degli Studi di Roma "La Sapienza", 00185 Roma (IT)
(72) Inventor: ZANZA, Alessio, 00135 Roma (IT); DI RUSSO , Franco Maria, 04022 Fondi (IT); GISARIO , Annamaria, 00184 Roma (IT); TESTARELLI, Luca, 00185 Roma (IT); RUTA, Giuseppe, 00184 Roma (IT); NATALI, Stefano, 00054 Cerveteri (IT)
(74) Representative: de Alteriis, Renato

(57) **Abstract**

An endodontic instrument (1) for shaping a root canal;
in which the endodontic instrument (1) defines a longitudinal axis (X);
in which the endodontic instrument (1) has a stem (2) and a working portion (3) for shaping said root canal,
in which the working portion (3) defines the tip (12) of the endodontic instrument (1), and the stem (2) defines the rear end (11) of the endodontic instrument (1) opposite the tip (12);
in which the endodontic instrument (1) has a longitudinal hole (10, 10a) crossing the stem (2) and part of the working portion (3), in particular whereby the rear end (11) has an opening (110);
characterized in that the outer lateral surface (31) of the working portion (3) is closed;
and in that said longitudinal hole (10, 10a) forms a cavity inside the endodontic instrument (1), said cavity being closed by an end portion of the endodontic instrument (1) comprising the tip (12).

## Description

### Field of the invention

The present invention relates to the field of endodontic instruments.

In particular, the present invention relates to the field of root canal shaping devices in endodontics and therefore to the macro-field of the oral health of the people.

### Background art

The introduction of the NiTi alloy in endodontics has enabled significant progress in shaping root canals, especially by virtue of the introduction of more efficient rotary and reciprocating instruments with respect to manual stainless steel instruments, which has led to an increase in the percentage of success in endodontic treatments. Despite the technological development of recent decades, the risk of intracanal breakage of these instruments remains an important challenge to be addressed. The principal causes of this problem are related to two types of stress: cyclic fatigue and torsional stress, as well as to the combination thereof.

As widely demonstrated in the literature, the intracanal breakage of endodontic instruments is a complication that can put the success of the therapy at risk and, therefore, the health of the patient. The causes of breakage of endodontic instruments are attributable to excessive torsional stress, to cyclic fatigue, or to the combination of these two phenomena. The two parameters that most affect the mechanical performance of endodontic instruments both in terms of torsional resistance and cyclic fatigue resistance are the mass and percentage of martensite/austenite characterizing the alloy, and thus the heat treatment. Both these two parameters appear to have an opposite effect with respect to torsional resistance and cyclic fatigue resistance. While the increase of the percentage of martensite ensures an increase of cyclic fatigue, conversely it appears to reduce the torsional resistance of the instrument, reducing stiffness. A decrease in mass instead ensures greater cyclic fatigue resistance, but on the contrary, causes a reduction in torsional resistance. This opposite relationship between martensite mass and cyclic fatigue resistance and torsional resistance seems to preclude the possibility of making an endodontic instrument which maintains good mechanical performance, both in terms of torsional resistance and cyclic fatigue resistance.

Therefore, the need to overcome the limits of the background art is felt.

US2021/330425A1 discloses a handpiece for endodontics capable of rotating and/or vibrating an endodontic instrument. More in detail, US2021/330425A1 discloses an endodontic handpiece capable of operating in three operating modes: i) rotation of the endodontic instrument, ii) vibration of the endodontic instrument, iii) rotation and vibration of the endodontic instrument. In a first variant of an endodontic instrument described in US2021/330425A1, the endodontic instrument is provided with a channel for passage of a fluid, having an inlet opening for the fluid and an outlet opening for the fluid, the latter being close to the tip of the endodontic instrument. US2021/330425A1 also describes a second variant of an endodontic instrument which, instead, does not have any channel for the passage of fluid. US2021/330425A1 describes that such a second variant may nevertheless be made to rotate and/or vibrate according to the three aforesaid operating modes.

DE102006007316B4 discloses an endodontic instrument specifically designed to convey or aspirate a fluid. The endodontic instrument described in DE102006007316B4 has at least one axial through hole, provided with an opening at the tip of the endodontic instrument.

CN107616849A also discloses an endodontic instrument specifically designed to convey or aspirate a fluid. Instead of an opening at the tip of the endodontic instrument, the endodontic instrument of CN107616849A has a plurality of lateral through holes, which are, in particular, openings of the lateral surface of the endodontic instrument.

Disadvantageously, the endodontic instruments disclosed in US2021/330425A1, DE102006007316B4 and CN107616849A which serve to convey a fluid are necessarily provided with openings for the outflow of the fluid, which are very difficult to manufacture, whereby the fabrication of the endodontic instrument is very complex and costly. Furthermore, the openings for the outflow of the fluid structurally weaken the endodontic instrument.

FR2964852A1 instead discloses an endodontic instrument without any axial holes.

### Summary of the invention

It is an object of the present invention to make an endodontic instrument which has good mechanical performance, both in terms of torsional resistance and in terms of cyclic fatigue, and which can be readily made.

In particular, an object of the invention is to make an endodontic instrument that is drastically less subject to breaking during the use thereof, and which can be readily made.

The present invention achieves at least one of such objects, and other objects which will become apparent in the light of the present description, by means of an endodontic instrument, according to claim 1, for shaping a root canal;
wherein the endodontic instrument defines a longitudinal axis;
wherein the endodontic instrument has a stem and a working portion for shaping said root canal,
wherein the working portion defines the tip of the endodontic instrument and the stem defines a rear end of the endodontic instrument opposite the tip;
wherein the endodontic instrument has a longitudinal hole crossing the stem and part of the working portion, in particular whereby the rear end has an opening that, in particular, is an opening of said longitudinal hole;
characterized in that the outer lateral surface of the working portion is closed;
and in that said longitudinal hole forms a cavity inside the endodontic instrument, said cavity being closed by an end portion of the endodontic instrument comprising the tip.

Advantageously, the entire outer surface of the working portion (including the tip) is completely closed, and therefore without openings.
The longitudinal hole, in particular, is a blind hole.

The invention further relates to a method according to claim 15.

The importance of the polar moment of inertia and of the mass distribution of the instruments with respect to the center of rotation of the instrument itself, in the determination of the torsional resistance thereof, has been observed.

An inversely proportional relationship has also been observed between the mass of the instrument and cyclic fatigue resistance.

It has been observed that the mass is correlated to torsional resistance according to how it is distributed with respect to the instrument's center of rotation, and not so much by the absolute value thereof. Whereby, the farther the mass is distributed from the center of rotation, the greater the torsional resistance thereof will be. The geometric parameter that describes the distribution of mass with respect to the center of rotation is defined as the polar moment of inertia.

Considering such findings, the inventors have developed the endodontic instrument according to the invention, having an axial hole, or longitudinal hole, which in particular is a blind hole. According to the experimental data collected by the inventors, the blind axial hole is capable of improving the mechanical performance of endodontic instruments by virtue of a twofold aspect: reducing the metal mass of the instrument, increasing resistance to cyclic fatigue; concentrating the mass away from the center of rotation of the instrument to increase torsional performance.

In particular, an instrument according to the invention allows optimizing the ratio between the absolute value of metal mass and the polar moment of inertia so as to simultaneously ensure cyclic fatigue resistance and torsional resistance. To reduce the mass of the instrument as much as possible without compromising the torsional strength thereof, it has been conceived to distribute the mass as much as possible peripherally, creating a hollow sectional design. The blind axial hole of the instrument is capable of drastically reducing the mass, and distributing it as much as possible peripherally. By virtue of this innovative design, the endodontic instrument, while maintaining unchanged cutting capabilities, is characterized by high cyclic fatigue resistance ensured by the reduced metal mass and by excellent torsional resistance, ensured by an optimization of the polar moment of inertia. Consequently, by virtue of the improvement in the mechanical performance of the hollow endodontic instrument with respect to conventional endodontic instruments, endodontic instrument breakage may be significantly reduced during the shaping of root canals, improving the success rates of endodontic treatments and the oral health of patients.

After considering and testing various manufacturing techniques, the inventors have identified electro-erosion, in particular die-sinking electro-erosion, as a particularly preferred, but not exclusive, technique for making the axial hole inside the endodontic instrument. This technique also allows the endodontic instrument to be made while limiting costs.

Advantageously, the outer lateral surface of the working portion (which extends around the longitudinal axis) is closed, whereby there are no slots or openings which would lead to a structural weakening.

Advantageously, the entire surface of the working portion is completely closed, whereby there are no slots or openings that would result in a structural weakening, and that would be difficult to make.

It is particularly preferable that the outer lateral surface of the working portion be without grooves, which would lead to a structural weakening.

In fact, one or more grooves or slots or openings on the outer surface of the working portion could act as points of lesser resistance during the compression and tension cycles to which the working portion is subjected during rotation within a canal curvature, considerably lowering the cyclic fatigue resistance.

It is particularly preferable that the working portion is not provided with grooves or slots, in particular neither internal nor external.

Advantageously, the working portion has no openings, for example lateral or at the tip, which would structurally weaken the instrument, drastically reducing the mechanical performance, and which would be complex and costly to make.

Advantageously, an instrument according to the invention can be made so as to allow the specific mechanical properties, in particular of the NiTi alloy, to be adapted, and to respond in a more targeted manner to the different clinical needs.

Advantageously, an instrument according to the invention can have a cutting capacity which ensures an adequate shaping of the root canal and, at the same time, it can have excellent flexibility, resistance to cyclic fatigue, and to torsional loads to which it is subjected during the shaping.

Further features and advantages of the invention will become more apparent in light of the detailed description of exemplary but non-exclusive embodiments.

The dependent claims describe particular embodiments of the invention.

### Brief description of the drawings

The description of the invention refers to the accompanying drawings, which are provided by way of non-limiting example, in which:
Fig. 1 shows a perspective view of an endodontic instrument according to the invention;
Fig. 2 shows a perspective view similar to Fig. 1, with some parts shown diagrammatically;
Fig. 3 shows a side view, with some parts shown diagrammatically, of the endodontic instrument of Fig. 1 and 2;
Fig. 4 shows a side view, with some parts shown diagrammatically, of a variant of an endodontic instrument according to the invention;
Fig. 5 shows an example of resistant section, or cross-section of the working portion which an endodontic instrument according to the invention can have;
Fig. 6 shows another example of resistant section, or cross-section of the working portion, which an endodontic instrument according to the invention can have;
Fig. 7 shows another example of resistant section, or cross-section of the working portion, which an endodontic instrument according to the invention can have;

The same elements or components or functionally similar elements or components have the same reference numeral.

### Description of exemplary embodiments of the invention

With reference to the Figures, exemplary embodiments of an endodontic instrument 1 for shaping a root canal are described.

In all the embodiments, the endodontic instrument 1 defines a longitudinal axis X;
the endodontic instrument 1 has a stem 2 and a working portion 3 for shaping said root canal,
the working portion 3 defines the tip 12 of the endodontic instrument 1 and the stem 2 defines the rear end 11 of the endodontic instrument 1 opposite the tip 12;
the endodontic instrument 1 has a longitudinal hole 10, 10a crossing the stem 2 (in particular, completely through the stem 2) and part, in particular only part, of the working portion 3, in particular, whereby the rear end 11 has an opening 110 that, in particular, is an opening of said longitudinal hole 10, 10a;
the outer lateral surface 31 of the working portion 3 is closed, in particular completely closed;
the longitudinal hole 10, 10a forms an inner cavity inside the endodontic instrument 1, said cavity being closed by an end portion of the endodontic instrument 1 comprising the tip 12.

Advantageously, the outer lateral surface 31 of the working portion 3 is closed, whereby said outer lateral surface 31 is without slots or openings.

Advantageously, the entire outer surface of the working portion 3 (including the tip 12) is completely closed, and therefore without openings.

The longitudinal hole 10, 10a, in particular, is blind.

In use, the endodontic instrument 1 is in particular adapted to rotate around the longitudinal axis X thereof. In particular, the stem 2 is preferably adapted to be constrained to a device, in particular to a handpiece, adapted to rotate the endodontic instrument 1 around the longitudinal axis X thereof.

The stem 2 can also be referred to as base or tang.

The working portion 3 can also be referred to as the active portion.

The working portion 3, in particular, extends from the stem 2, in particular starting from the stem 2.

The tip 12 is in particular an axial end of the endodontic instrument 1, and the rear end 11 is in particular another axial end of the endodontic instrument 1.

It is particularly preferred that the outer lateral surface 31 of the working portion 3 be without grooves. In other words, the outer lateral surface 31 of the working portion 3 is substantially smooth (in the present description, "smooth" means, in particular, without grooves).

It is particularly preferable that the inner lateral surface of the working portion 3, which in particular delimits a longitudinal portion of said longitudinal hole 10, 10a, be without grooves (i.e., substantially smooth).

The outer lateral surface 31 of the working portion 3, in particular, is continuous.

Preferably, the outer lateral surface 31 of the working portion 3 is at least partially helical, for example is helical, preferably with a pitch from 6 to 9 mm.

The orientation of the cutting portions, or blades, of the working portion 3 may be towards the right or the left, in particular for use in continuous rotation or by means of alternating rotational movement or reciprocation, with counterclockwise cutting angles and clockwise disengagement angles.

Preferably, the working portion 3 is externally tapered toward the tip 12, preferably with a taper from 4 to 8%.

Preferably, the opening 110 of the rear portion 11 is the only opening of the stem 2.

Preferably, the outer lateral surface 21 of the stem 2 is without longitudinal grooves. Preferably, the inner lateral surface of the stem 2, which delimits a longitudinal portion of said longitudinal hole 10, 10a, is without grooves, in particular without longitudinal grooves.

Preferably, the stem 2 is without longitudinal grooves or slots.

Preferably, the outer lateral surface 21 of the stem 2 is cylindrical or substantially cylindrical.

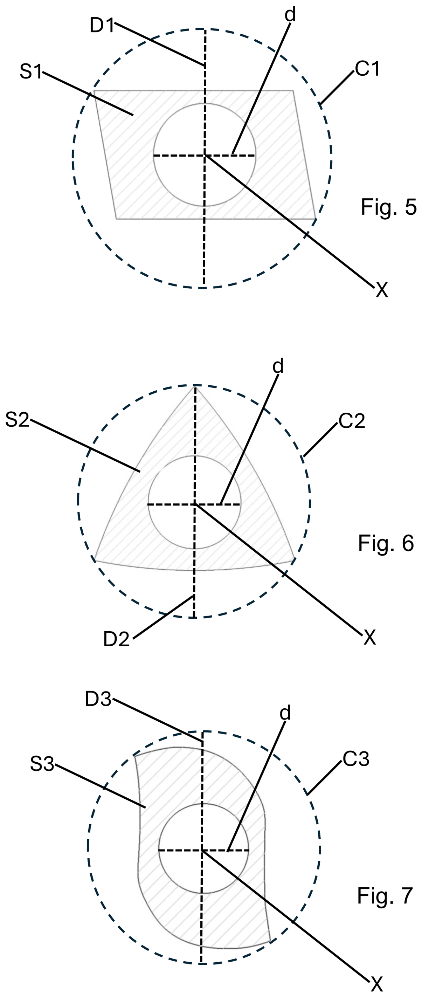

Fig. 5 shows an example of resistant section S1 which the working portion of the endodontic instrument 1 can have. In this example, the resistant section S1 is substantially in the shape of a parallelogram.

Fig. 6 shows another example of resistant section S2 which the working portion of the endodontic instrument 1 can have. In this example, the resistant section S2 is substantially in the shape of a triangle, in particular with outwardly convex sides, in particular slightly convex.

Fig. 7 shows another example of resistant section S3 which the working portion of the endodontic instrument 1 can have.

A resistant section is a cross-section of the working portion 3, in particular taken on a plane orthogonal to the longitudinal axis X.

Preferably, the working portion 3, in particular the resistant section thereof, has a positive Rake angle, in particular weakly positive.

Preferably, for any resistant section S1, S2, S3 of the endodontic instrument 1 (in particular taken in any zone of the working portion 3), the inner diameter "d" of the endodontic instrument 1 is from 20% to 50% lower than the diameter D1, D2, D3 of the circumference C1, C2, C3 circumscribing the resistant section S1, S2, S3, or cross-section, of the endodontic instrument 1, in particular of the working portion 3. In particular, said circumscribed circumference C1, C2, C3 passes through the outermost points of the resistant section S1, S2, S3.

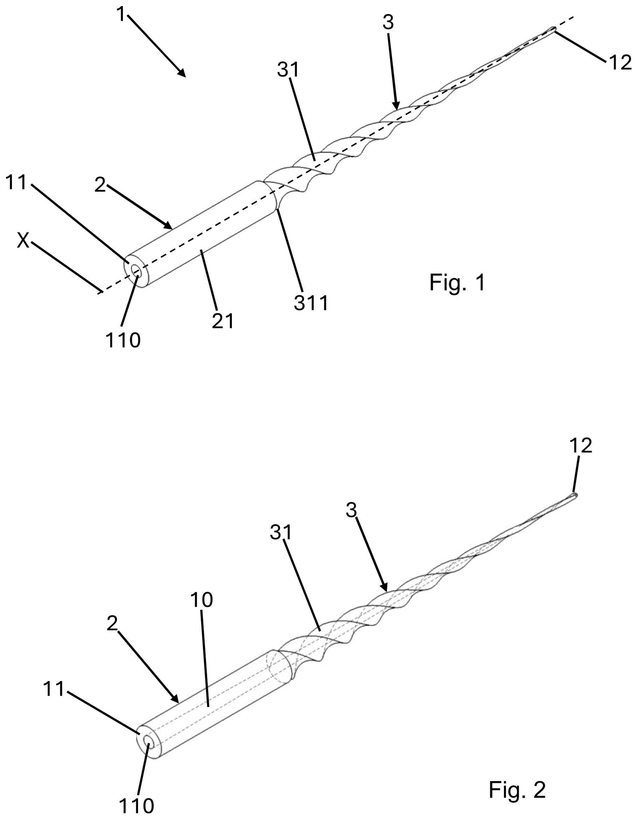

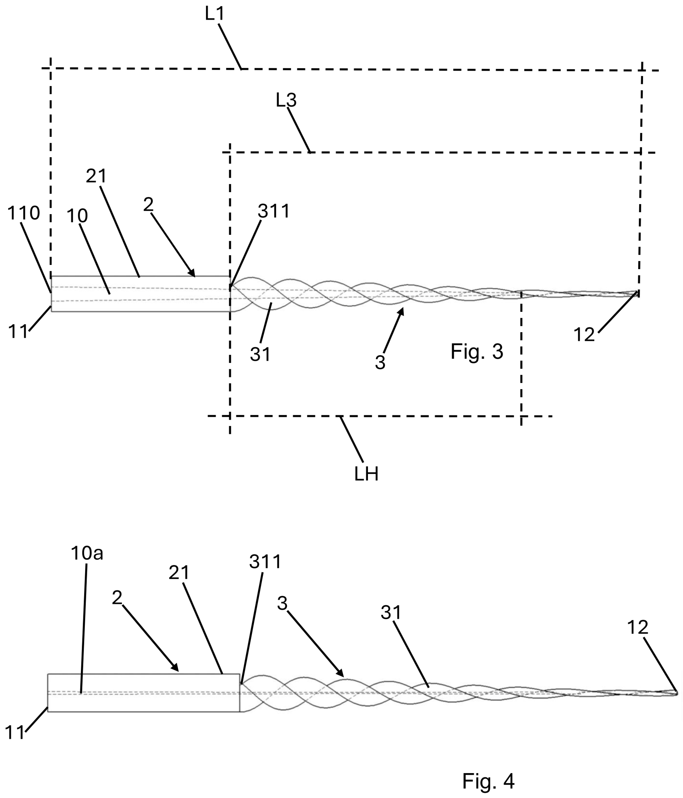

The inner lateral surface of the endodontic instrument 1 delimiting said longitudinal hole 10 can be frustoconical (Fig. 2, 3), in particular tapered towards the tip 12; or the inner lateral surface of the endodontic instrument 1 delimiting said longitudinal hole 10a can be cylindrical (Fig. 4).

In other words, said longitudinal hole can be frustoconical or cylindrical.

In any case, the inner lateral surface of the endodontic instrument 1 delimiting the longitudinal hole 10, 10a runs around the longitudinal axis X.

Preferably, the inner diameter "d" of the inner lateral surface delimiting said longitudinal hole is from 100 to 500 µm.

The endodontic instrument 1 is preferably made of metal, preferably of a Nickel-Titanium alloy.

Preferably, said longitudinal hole 10, 10a extends up to 75%, or up to 50%, of the axial length L3 of the working portion 3, in particular from the end 311 of the working portion 3 attached to the stem 2.

Advantageously, the longitudinal hole forms an inner cavity in the endodontic instrument 1, in particular so that the longitudinal hole does not completely cross the working portion 3. As already said, said cavity is closed by an end portion of the endodontic instrument comprising the tip 12. Preferably, as already said, the longitudinal hole extends up to 75%, or up to 50%, of the axial length L3 of the working portion 3, in particular from the end 311 of the working portion 3 attached to the stem 2.

In particular, preferably, the length LH (Fig. 3) of the portion of the longitudinal hole 10, 10a delimited by the working portion 3 is preferably up to 75% or up to 50% of the length L3 of the working portion 3. The length LH and the length L3 are both measured parallel to the longitudinal axis X. The length LH is measured from the end 311 of the working portion 3 attached to the stem 2; the length L3 is measured from the end 311 of the working portion 3 attached to the stem 2 up to the tip 12. Preferably, said opening 110 of the stem 2 (i.e., of the rear end 11) is the only opening of the cavity formed by the longitudinal hole 10, 10a, and in particular is the only opening of the endodontic instrument 1.

It is particularly preferable that the working portion 3 is not provided with grooves, in particular neither internal nor external, and, as already said, the working portion 3 has no openings or slots.

Preferably, the opening 110 is the only opening of the endodontic instrument 1.

It is particularly preferred that the endodontic instrument 1 is not provided with grooves or slots, in particular neither internal nor external, with the exception of said opening 110 of the stem 11.

Preferably, the endodontic instrument 1 has one or more of the following features:
- the outer diameter of the tip 12 is from 0.15 to 0.45 mm;
- the axial length L1 is from 17 to 31 mm, said axial length L1 being in particular the total axial length L1 of the endodontic instrument 1, in particular from the rear end 11 to the tip 12;
- the outer diameter of the stem 2 is from 0.8 to 1.4 mm.

The invention further relates to a method for making an endodontic instrument 1, in which said longitudinal hole 10, 10a is made by means of an electro-erosion process, preferably die-sinking electro-erosion, and preferably in which the outer lateral surface 31 of the working portion 3 is made by means of an electro-erosion process, preferably wire electro-erosion.

In particular, the endodontic instrument is made starting from a bar, preferably cylindrical, which is preferably subjected to electro-erosion, in particular in which the bar is preferably subjected to the aforesaid electro-erosion processes.

It is to be understood that electro-erosion is a particularly preferred, but not exclusive, method.

## Claims

1. An endodontic instrument (1) for shaping a root canal;
wherein the endodontic instrument (1) defines a longitudinal axis (X);
wherein the endodontic instrument (1) has a stem (2) and a working portion (3) for shaping said root canal,
wherein the working portion (3) defines the tip (12) of the endodontic instrument (1), and the stem (2) defines the rear end (11) of the endodontic instrument (1) opposite the tip (12);
wherein the endodontic instrument (1) has a longitudinal hole (10, 10a) crossing the stem (2) and part of the working portion (3), in particular whereby the rear end (11) has an opening (110), which in particular is an opening of said longitudinal hole (10, 10a);
**characterized in that** the outer lateral surface (31) of the working portion (3) is completely closed;
and **in that** said longitudinal hole (10, 10a) forms a cavity inside the endodontic instrument (1), said cavity being closed by an end portion of the endodontic instrument (1) comprising the tip (12).

2. An endodontic instrument (1) according to claim 1, wherein the outer lateral surface (31) of the working portion (3) is continuous.

3. An endodontic instrument (1) according to claim 1 or 2, wherein the outer lateral surface (31) of the working portion (3) is without grooves.

4. An endodontic instrument (1) according to any one of the preceding claims, wherein said longitudinal hole (10, 10a) extends up to 75% of the axial length (L3) of the working portion (3).

5. An endodontic instrument (1) according to any one of the preceding claims, wherein said longitudinal hole (10, 10a) extends up to 50% of the axial length (L3) of the working portion (3).

6. An endodontic instrument (1) according to any one of the preceding claims, wherein said opening (110) of the stem (2) is the only opening of said cavity.

7. An endodontic instrument (1) according to any one of the preceding claims, wherein said opening (110) of the stem (2) is the only opening of the endodontic instrument (1).

8. An endodontic instrument (1) according to any one of the preceding claims, wherein the inner lateral surface of the working portion (3), which in particular delimits a longitudinal portion of said longitudinal hole (10, 10a), is without grooves.

9. An endodontic instrument (1) according to any one of the preceding claims, wherein the outer lateral surface (31) of the working portion (3) is at least partially helical.

10. An endodontic instrument (1) according to any one of the preceding claims, wherein the outer lateral surface (21) of the stem (2) is without longitudinal grooves.

11. An endodontic instrument (1) according to any one of the preceding claims, wherein, in particular for any resistant section (S1, S2, S3) of the endodontic instrument (1), the inner diameter (d) of the endodontic instrument (1) is from 20% to 50% smaller than the diameter (D1, D2, D3) of the circumference (C1, C2, C3) circumscribing the resistant section (S1, S2, S3), or cross-section, of the endodontic instrument (1), in particular of the working portion (3).

12. An endodontic instrument (1) according to any one of the preceding claims, having an inner lateral surface delimiting said longitudinal hole (10), which is frustoconical, in particular tapered toward the tip (12) of the endodontic instrument (1).

13. An endodontic instrument (1) according to any one of claims 1 to 11, having an inner lateral surface delimiting said longitudinal hole (10a), which is cylindrical.

14. An endodontic instrument (1) according to any one of the preceding claims, made of Nickel-Titanium alloy; and/or wherein the outer diameter of the tip (12) is from 0.15 to 0.45 mm.

15. A method for making an endodontic instrument (1) according to any one of the preceding claims, wherein said longitudinal hole (10, 10a) is made by means of an electro-erosion process, in particular die-sinking electro-erosion;
preferably wherein the outer lateral surface (31) of the working portion (3) is made by means of an electro-erosion process, in particular wire electro-erosion.
